# FASCICULE DE BREVET EUROPEEN

(11) **EP 2 011 357 B1**
(45) Date de publication et mention de la délivrance du brevet: **21.07.2010**
(21) Numéro de dépôt: 07731717.0
(22) Date de dépôt: 09.03.2007
(51) Int. Cl.: H04W 36/08

(54) **GESTION DE RESSOURCES RADIO DANS UN RESEAU DE TELECOMMUNICATIONS RADIO**
FUNKBETRIEBSMITTELVERWALTUNG IN EINEM FUNKTELEKOMMUNIKATIONSNETZ
RADIO RESOURCE MANAGEMENT IN A RADIO TELECOMMUNICATION NETWORK

(30) Priorité: 26.04.2006 FR 0603727
(43) Date de publication de la demande: 07.01.2009
(73) Titulaire: FRANCE TELECOM, 75015 Paris (FR)
(72) Inventeur: PISCHELLA, Mylène, Paris 75014 (FR)
(74) Mandataire: Cabinet Plasseraud
(86) Numéro de dépôt international: PCT/FR2007/050901
(87) Numéro de publication internationale: WO 2007/125229

(56) Documents cités:
- EP-A- 1 519 607
- WO-A-00/35226
- WO-A2-2005/084146

## Description

La présente invention concerne les réseaux de télécommunications radio mobiles et, plus particulièrement, la gestion des ressources radio à allouer à des terminaux dans un tel réseau.

Les réseaux de télécommunications radio mobiles couvrent classiquement différentes zones géographiques à l'aide de différentes cellules radio.

Un terminal en cours de communication dans un réseau de radio communication dispose de ressources radio qui lui sont allouées dans une première cellule du réseau et sur lesquelles il peut transmettre et/ou recevoir des données et/ou de la voix. Dans le cas où ce terminal se déplace, il est possible que les ressources radio déjà allouées dans cette première cellule ne permettent pas à ce terminal de continuer la communication en cours de manière satisfaisante. Dans ce cas, de nouvelles ressources radio peuvent lui être allouées dans une seconde cellule de sorte à lui permettre de communiquer à nouveau dans de bonnes conditions. Certains réseaux garantissent une continuité de la communication en cas de changement de cellules. Tel est le cas des réseaux d'architecture cellulaire notamment. Dans d'autres, la communication établie précédemment est rompue et une nouvelle communication est établie dans la seconde cellule, tel est le cas dans certains réseaux de type WiFi.

Une telle gestion des ressources radio comprend une étape de prise de décision d'un changement de ressources radio depuis la première cellule vers la seconde cellule.

Dans certains réseaux de télécommunications, une telle décision de changement de cellule est prise au niveau d'une entité centralisée du réseau qui est en charge de gérer une pluralité de cellules du réseau. Tel est le cas dans un réseau de télécommunications basé sur un protocole de type UMTS (pour 'Universal Mobile Telecommunication System') défini par l'organisme de normalisation 3GPP (pour '3rd Generation Partnership Project Agreement'). Ces réseaux sont basés sur une architecture cellulaire hiérarchisée dans laquelle une entité réseau, ou station de base, ou encore NodeB, est en charge d'une ou plusieurs cellules radio et un contrôleur central, ou RNC (pour 'Radio Network Controller'), est en charge d'une ou plusieurs entités NodeB. Dans une telle architecture, les ressources radio allouées à un terminal dans une cellule associée à un NodeB, sont gérées par le contrôleur central qui est en charge de ce NodeB.

Ce contrôleur central dispose notamment d'informations relatives à la charge des cellules qu'il gère, ainsi que d'informations relatives aux signaux échangés dans ces cellules entre les entités NodeB et les terminaux respectivement. Sur la base de ces informations, il est alors en mesure de prendre une décision de changement de cellule pour un terminal situé dans une des cellules qu'il gère. Ainsi, en cas de mobilité d'un terminal en cours de communication, une décision de transfert intercellulaire peut être prise par le contrôleur central. La gestion des ressources radio est dans ce cas une gestion centralisée et permet de prendre une décision de changement de cellules sur la base d'informations centralisées concernant les différentes cellules gérées par le contrôleur central.

Mais, dans d'autres réseaux de télécommunications, la gestion des ressources radio en cours de mobilité est décentralisée au niveau de chaque cellule. Ces réseaux sont basés sur une architecture distribuée, dans laquelle chaque cellule est responsable des décisions de changement de cellule prises pour ses terminaux.

Tel est le cas dans les réseaux de type WiFi, basés sur le protocole IEEE 802.11 (pour 'Institute of Electrical and Electronics Engineer'). Ainsi, lorsqu'un terminal mobile détecte que les ressources radio qui lui sont allouées dans une cellule gérée par un premier point d'accès, ne sont plus adaptées à sa communication, il recherche un second point d'accès qui lui offre de meilleures conditions de communication. Par exemple, le terminal détermine un niveau de puissance associé à un signal reçu depuis le premier point d'accès du réseau qui gère ces communications. Puis, lorsque cette puissance atteint un niveau relativement faible, le terminal détermine des niveaux de puissance associés à des signaux reçus depuis d'autres points d'accès du réseau. Il est alors en mesure de sélectionner le second point d'accès pour la gestion de ses communications sur la base de ces différents niveaux de puissance. Ainsi, dans un tel contexte, la gestion des ressources radio est réalisée de manière décentralisée au niveau de la cellule et plus précisément dans l'exemple décrit ci-dessus, au niveau de chacun des terminaux dans la cellule.

De manière générale, lorsque la décision de changement de cellule est prise au niveau de la cellule, que cette décision soit prise au niveau du terminal lui-même ou encore au niveau du point d'accès de la cellule, il n'est pas aisé de baser cette décision sur des informations relatives aux ressources radio dans la ou les potentielles cellules cibles du changement de cellule.

Un document W02005084146 propose de prendre en compte des informations relatives aux ressources radio des cellules voisines afin de décider d'un transfert de cellules pour un terminal du réseau. Plus précisément, au cours d'un tel transfert, il est en effet prévu que la station de base qui sert la communication courante de ce terminal, c'est-à-dire la station de base serveuse, requière des informations de qualité de service QoS (pour "Quality Of Service") auprès des stations de base de cellules voisines. Ces stations de base voisines répondent alors à cette station de base serveuse en indiquant les informations QoS requises. Puis, ces informations QoS sont ensuite transmises au terminal concerné, ce dernier prenant la décision finale du transfert de cellule.

Mais, ce type de gestion de ressources radio présente le désavantage de générer un trafic de signal supplémentaire dont la quantité est directement liée à la quantité de messages échangés relativement aux informations QoS entre la station de base serveuse et les différentes stations de base voisines.

En outre, la fiabilité d'une telle méthode repose sur la robustesse du lien entre la station de base de la cellule courante et les stations de base des cellules cibles potentielles. Une telle caractéristique affaiblit les performances de cette méthode dans certaines conditions du réseau.

La présente invention ne présente pas les inconvénients précités.

L'invention permet notamment de réduire la quantité de messages requis pour la prise en compte, au niveau d'une cellule, d'informations de ressources radio relatives à d'autres cellules d'un réseau de télécommunications.

Un premier aspect de la présente invention propose un procédé de gestion de ressources radio dans un réseau de télécommunications comprenant une pluralité de cellules radio et une base de données qui est associée à ladite pluralité de cellules et qui comprend des informations relatives à des ressources radio de chaque cellule radio de la pluralité de cellules, cette base de données étant gérée par une entité de gestion de base de données. Le procédé comprend les étapes suivantes au niveau d'une première cellule :
/a/ émettre à destination de l'entité de gestion de base de données un message de requête d'informations relatives à des ressources radio d'au moins une seconde cellule de ladite pluralité de cellules ;
/b/ recevoir depuis l'entité de gestion de base de données un message de réponse indiquant lesdites informations requises ; et
/c/ décider de requérir des ressources radio dans ladite seconde cellule sur la base desdites informations reçues.

Une base de données est ainsi avantageusement associée à une pluralité de cellules d'un réseau, et permet de fournir à une cellule de cette pluralité de cellules, des informations sur des cellules voisines afin qu'une décision de changement de cellule puisse être prise de manière pertinente, au niveau de ladite cellule.

Ainsi, les informations relatives aux ressources radio peuvent aisément être envoyées à une cellule qui en fait la requête, lorsque cette dernière souhaite déterminer s'il est souhaitable qu'un des terminaux avec lesquels elle communique, utilise des ressources radio d'une autre cellule du réseau. Les informations reçues depuis l'entité de gestion de base de données en réponse à une telle requête peuvent ensuite être utilisées en entrée d'algorithmes décisionnels de mobilité, bien connus de l'homme du métier, gérés dans la cellule. On peut éventuellement prévoir de prendre simultanément en considération en entrée de l'algorithme, d'autres informations, telles que des mesures effectuées par le ou les terminaux sur différentes cellules.

Une décision de changement de cellule d'un terminal est prise au niveau de la cellule, c'est-à-dire au niveau d'une entité appartenant à la cellule. Une telle entité peut être une entité de gestion de ressources radio de la cellule ou encore le terminal pour lequel une telle décision de changement de cellule est à prendre.

En effet, dans une première variante, on peut prévoir que l'entité de gestion des ressources radio de la cellule considérée est chargée de prendre la décision de changement de cellule pour les terminaux qui sont en communication avec elle. Dans ce cas, l'entité de gestion de ressources radio de la cellule peut émettre un message de requête à destination de l'entité de gestion de base de données. Cette dernière répond par l'émission d'un message de réponse à l'entité de gestion de ressources radio considérée, qui, après avoir pris une décision au sujet d'un éventuel changement de cellule, en informe le terminal.

Dans une seconde variante, on peut prévoir que la charge de cette prise de décision, au niveau de la cellule, incombe au terminal concerné par cette décision. Dans ce dernier cas, les informations relatives aux ressources radio peuvent être requises par l'entité de gestion de ressources radio de la cellule considérée, reçues par l'entité de gestion de ressources radio, puis transmises depuis cette entité de gestion de ressources radio jusqu'à ce terminal.

On peut alternativement prévoir que, dans le cas où le terminal est en charge de la décision de changement de cellule, il requiert directement auprès de l'entité de gestion de base de données ces informations. Puis, il reçoit directement depuis cette entité de gestion de base de données les informations requises à partir desquelles il peut prendre une décision.

On note que les étapes /a/ à /c/ peuvent être mises en oeuvre alors que des ressources radio sont déjà allouées au terminal dans la première cellule. Ce cas correspond à un transfert de cellule, ou 'handover'.

Les étapes /a/ à /c/ peuvent aussi être mises en oeuvre alors que le terminal requiert des ressources radio dans la première cellule. Ce cas correspond à un contexte d'admission d'un terminal dans une cellule du réseau.

La présente méthode peut s'appliquer avantageusement à tout type de service, et particulièrement aux services de télécommunications basés sur une transmission par paquet, selon un protocole de type IP (pour 'Internet Protocol').

Le réseau de télécommunications peut offrir un ensemble de types de flux de données auxquels sont associés des niveaux de qualité de service respectifs. Le message de requête d'informations relatives à des ressources radio peut alors indiquer une information relative à une liste de cellules comprises dans la pluralité de cellules et au moins un type de flux de données dudit ensemble de types de flux de données.

Le message de réponse peut indiquer, pour chaque cellule de la liste des cellules indiquée dans le message de requête correspondant et pour le type de flux de données indiqué dans le message de requête correspondant, une réponse basée sur un nombre de ressources radio disponibles dans ladite cellule et sur le niveau de qualité de service associé au type de flux indiqué dans le message de requête.

Dans un tel contexte, une base de données comprend, pour chaque cellule du réseau de télécommunications considéré, et pour chaque type de flux de données offert dans ce réseau, des informations relatives aux ressources radio dans la cellule considérée qui permettent de déterminer si cette cellule est capable d'assurer le niveau QoS associé à ce type de flux de données.

On peut prévoir que l'information relative à une liste de cellules correspond à un identifiant de la cellule qui émet le message de requête et que l'entité de gestion de base de données détermine la liste de cellules correspondant au message de réponse sur la base d'une association entre un identifiant de chaque cellule et une liste de cellules, cette association étant stockée dans la base de données.

Dans une variante, l'information relative à une liste de cellules correspond à une liste d'identifiants de cellules pour lesquelles le message de requête est émis. Dans ce cas, l'entité de gestion de base de données est en mesure de récupérer directement les informations requises relativement à toutes les cellules listées dans le message de requête.

Dans un mode de réalisation de la présente invention, le message de réponse indique également, pour chaque cellule de la liste des cellules et pour le type de flux de données indiqués dans le message de requête correspondant, un nombre d'utilisateurs pouvant être servis dans la cellule pour le type de flux de données indiqué. Une telle indication peut être prise en compte de manière pertinente dans un algorithme décisionnel de changement de cellule.

Dans un mode de réalisation de la présente invention, une cellule applique périodiquement une allocation de ressources radio planifiée.

Dans un tel contexte, la cellule émet un message de mise à jour de la base de données à destination de l'entité de gestion de base de données après chacune desdites allocations de ressources radio. Puis, sur réception de ce message de mise à jour, l'entité de gestion de base de données met à jour en conséquence les informations stockées dans la base de données.

Ainsi, avantageusement, la base de données est mise à jour régulièrement, de manière pertinente.

Le message de réponse peut également indiquer, pour chaque cellule de la liste des cellules et pour le type de flux de données indiqués dans le message de requête correspondant, un niveau de fiabilité qui correspond au nombre de messages de requête qui ont été reçus depuis la dernière mise à jour de la base de données et qui indiquent ladite cellule.

Ainsi, même si il n'y a pas encore eu de mise à jour de la base de données relativement à des changements de cellules de certains terminaux vers une cellule déterminée, il est possible de prendre en compte de potentiels changements vers cette cellule. En effet, ici on prend en compte le nombre de messages de requête reçus pour cette cellule déterminée et on déduit qu'il est possible que des modifications prochaines affectent les ressources radio de cette cellule, notamment dans le cas où certains au moins de ces messages de requête déboucheraient sur un changement de cellule vers cette cellule déterminée.

Un deuxième aspect de la présente invention propose une entité de gestion de ressources radio adaptée pour la mise en oeuvre d'un procédé selon le premier aspect de la présente invention.

Un troisième aspect de la présente invention propose un terminal adapté pour la mise en oeuvre d'un procédé selon le premier aspect de la présente invention.

Un quatrième aspect de la présente invention propose une entité de gestion de base de données adaptée pour la mise en oeuvre d'un procédé selon le premier aspect de la présente invention.

Un cinquième aspect de la présente invention propose un système de télécommunications comprenant une entité de gestion de base de données selon le quatrième aspect de la présente invention et un parmi le groupe comprenant un terminal selon le troisième aspect de la présente invention et une entité de gestion de ressources radio selon le deuxième aspect de la présente invention.

Un sixième aspect de la présente invention propose un programme d'ordinateur destiné à être installé dans une entité de gestion de base de données selon le quatrième aspect de la présente invention, comprenant des instructions aptes à mettre en oeuvre le procédé selon le premier aspect de la présente invention, lors d'une exécution du programme par des moyens de traitement de l'entité de gestion de base de données.

Un septième aspect de la présente invention propose un programme d'ordinateur destiné à être installé dans un terminal selon le troisième aspect de la présente invention, comprenant des instructions aptes à mettre en oeuvre le procédé selon la premier aspect de la présente invention, lors d'une exécution du programme par des moyens de traitement du terminal.

Un huitième aspect de la présente invention propose un programme d'ordinateur destiné à être installé dans une entité de gestion de ressources radio selon le deuxième aspect de la présente invention, comprenant des instructions aptes à mettre en oeuvre le procédé selon le premier aspect de la présente invention, lors d'une exécution du programme par des moyens de traitement de l'entité de gestion de ressources radio.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre une architecture de réseau de télécommunications selon un mode de réalisation de la présente invention ;
- la figure 2 illustre un échange de messages au sein d'un réseau de télécommunications selon un mode de réalisation de la présente invention ; et
- la figure 3 illustre une mise à jour de base de données selon un mode de réalisation de la présente invention.

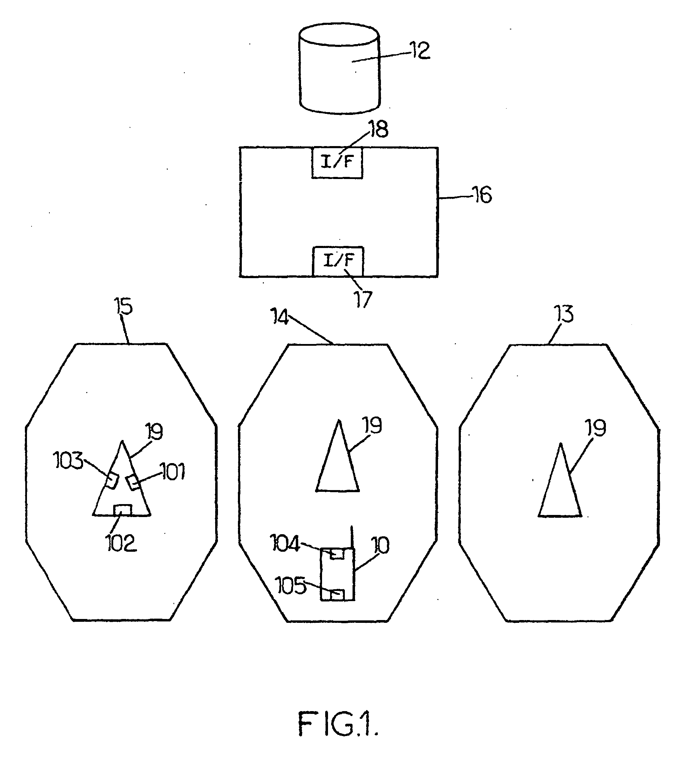

La figure 1 illustre une architecture décentralisée de réseau de télécommunications selon un mode de réalisation de la présente invention.

Un tel réseau de télécommunications comprend une pluralité de cellules 13-15 à laquelle est associée une base de données 12. Cette base de données peut être gérée par une entité de gestion de base de données 16 qui comprend :
- une première unité d'interface 17 avec ladite pluralité de cellules adaptée pour recevoir depuis ces cellules des messages de requête 21 d'informations relatives à des ressources radio d'au moins une autre cellule de cette pluralité de cellules et adaptée pour émettre un message de réponse 22 correspondant au message de requête 21; et
- une seconde unité d'interface 18 avec la base de données 12 adaptée pour récupérer les informations relatives aux ressources radio requises par un message de requête 21.

La première interface peut recevoir un message de requête 21 d'informations relatives à des ressources radio qui indique une information relative à une liste de cellules et au moins un type de flux de données.

La seconde interface peut alors récupérer dans la base de données une réponse pour chacune de ces cellules et pour ce type de flux de données.

Lorsque l'information relative à une liste de cellules correspond à un identifiant de la cellule qui a émis le message de requête, l'entité de gestion de base de données détermine la liste de cellules correspondant au message de réponse sur la base d'une association entre un identifiant de chaque cellule et une liste de cellules, cette association étant stockée dans la base de données.

La seconde interface peut aussi récupérer dans la base de données un nombre d'utilisateurs pouvant être servis dans ladite cellule pour le type de flux de données indiqué dans le message de requête et dans chacune des cellules de la liste indiquée.

La première interface peut également recevoir des messages de mise à jour de la base de données respectivement depuis les cellules de la pluralité de cellules et la seconde unité d'interface peut avantageusement mettre à jour la base de données en fonction d'informations contenues dans ces messages de mise à jour. La première interface peut alors émettre un message de réponse 22 indiquant, pour les cellules et le type de flux indiqués dans le message de requête, un niveau de fiabilité qui correspond au nombre de messages de requête qui ont été reçus depuis la dernière mise à jour de la base de données et qui indiquent la cellule considéré.

Chaque cellule radio comprend une entité de gestion des ressources radio 19. Une telle entité de gestion des ressources radio peut par exemple correspondre, dans le cas des réseaux WiFi, à un point d'accès.

Dans un mode de réalisation de la présente invention, elle peut comprendre :
- une unité d'émission 101 adaptée pour émettre à destination de l'entité de gestion de base de données 16 un message de requête 21 d'informations relatives à des ressources radio ;
- une unité de réception 102 adaptée pour recevoir depuis l'entité de gestion de base de données 16 un message de réponse 22 indiquant les informations requises ; et
- une unité de décision 103 adaptée pour décider de requérir des ressources radio dans une autre cellule sur la base des informations reçues.

Chacune de ces cellules 13-15 est en charge de prendre les décisions relatives à la gestion des ressources radio, ces décisions correspondant notamment à une gestion de la mobilité de terminaux qui sont déjà en communication dans la cellule, ou encore au contrôle d'admission d'une communication d'un terminal dans la cellule considérée.

Ces cellules sont donc associées à la base de données 12 qui a la charge de fournir à chacune d'elles des informations relatives aux ressources radio des autres cellules.

Un utilisateur d'un terminal 10, qui souhaite transmettre et/ou recevoir des données, requiert des ressources radio dans une cellule du réseau. La communication que le terminal souhaite effectuer correspond à un flux de données d'un certain type de flux de données offert dans ce réseau.

Le terminal 10, dans un mode de réalisation de la présente invention, comprend :
- une unité de réception 104 adaptée pour recevoir depuis l'entité de gestion de ressources radio un message de réponse 22 indiquant des informations relatives aux ressources radio d'une seconde cellule, lesdites informations ayant été requises auprès de l'entité de gestion de base de données à partir de la première cellule ; et
- une unité de décision 105 adaptée pour décider de requérir des ressources radio dans ladite seconde cellule sur la base desdites informations reçues.

Les informations requises auprès de l'entité de gestion de base de données 16 à partir de la première cellule peuvent, dans un mode de réalisation de la présente invention, être requises par le terminal en émettant un message de requête 21 d'informations relatives à des ressources radio d'au moins la seconde cellule.

Un tel réseau de télécommunications offre un pluralité de types de flux de données, comme par exemple un flux de données de type FTP (pour 'File Transfer Protocol'), ou de type HTTP (pour 'HyperText Transfer Protocol'), ou encore un flux de données de type Voix sur IP, ou Voix sur IP avec compression des silences, ou également un flux de données de type vidéo, etc... Des organismes de normalisation définissent différents types de flux de données qui correspondent à différents types d'allocations de ressources radio.

Ainsi, par exemple, dans un réseau de type UMTS (pour 'Universal Mobile Telecommunication System'), un type de flux de données requérant un débit maximum déterminé, correspond à un type d'allocation de ressources radio (ou "Radio Bearer"), qui peut être défini par un nombre fixé de codes WCDMA (pour 'Wideband Code Division Multiple Access').

Dans un réseau de télécommunications de type IEEE 802.16e, différents types de flux de données sont définis comme par exemple, un type de flux de données temps réel présentant un débit fixe, ou encore un type de flux de données temps réel présentant un débit variable, ou un type de flux de données non temps réel présentant un débit variable, ou également un type de flux de données "best effort", ou un type de flux de données temps réel étendu avec un débit variable.

Généralement, à chaque type de flux de données est associé un niveau de Qualité de Service (QoS, pour 'Quality Of Service') qui est avantageusement pris en compte dans une décision de changement de cellule selon un mode de réalisation de la présente invention.

Pour atteindre le niveau de QoS associé à un type de flux de données, il est requis que les ressources radio utilisées lors de la transmission de ce flux répondent à certaines contraintes, telles qu'une contrainte relative à un temps de latence, une contrainte relative à un débit fixe ou garanti, une contrainte de priorité par rapport à d'autres types de flux de données, etc....

Ainsi, une allocation de ressources radio peut prendre en compte un niveau de QoS associé au type du flux de données que le terminal souhaite transmettre et/ou recevoir en se fondant avantageusement sur des contraintes du type de celles énoncées ci-dessus.

Une telle gestion de changement de cellule permet ainsi d'assurer un niveau de QoS correspondant à la communication souhaitée par un terminal, dans un réseau de télécommunications radio gérant la mobilité de manière décentralisée au niveau de la cellule. Avantageusement, elle n'entraîne pas une charge de signalisation additionnelle importante, puisqu'une cellule souhaitant recevoir des informations lui permettant de prendre une décision pertinente de changement de cellule reçoit ces informations uniquement depuis l'entité de gestion de base de données, et non pas depuis les cellules voisines, comme dans l'art antérieur.

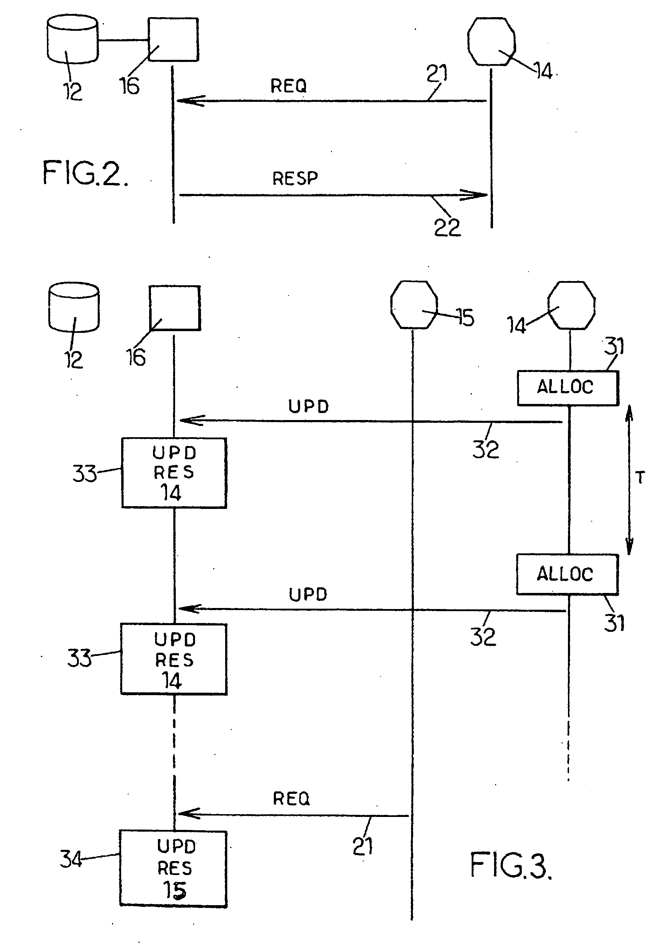

La figure 2 illustre une gestion des échanges entre la cellule 14 et l'entité de gestion de base de données 12 lors d'une requête d'informations. Un message de requête 21 d'informations relatives aux ressources radio est émis depuis la cellule 14 à destination de l'entité de gestion de base de données 12.

Ce message de requête 21 peut indiquer le type de flux de données souhaité par le terminal 10 pour sa communication, ainsi qu'une information relative à une liste de cellules voisines qui sont susceptibles d'accueillir sa communication.

Un terminal peut requérir des ressources radio pour plusieurs types de flux de données simultanément, chacun étant associé à des niveaux de qualité respectifs différents. En effet, par exemple, un terminal peut télécharger un fichier FTP alors qu'il est par ailleurs en communication téléphonique. Un message de requête peut donc indiquer une pluralité de types de flux de données.

On peut prévoir que chaque cellule connaît une liste de cellules voisines vers lesquelles un utilisateur est susceptible de faire un changement de cellule. Une telle liste peut être, soit définie de façon statique par un opérateur à l'ouverture du réseau, soit obtenue de façon dynamique. Dans ce dernier cas, il peut s'agir d'une mise à jour de la liste définie de façon statique par l'opérateur en fonction, notamment par exemple, de modifications faites dans le déploiement de différentes entités de gestion de ressources radio dans le réseau. Il est également possible que cette liste soit générée ou mise à jour automatiquement grâce à des informations statistiques relatives aux différents transferts de cellules qui sont effectués depuis la cellule considérée. Dans ce contexte, l'information relative à une liste de cellules indiquée dans le message de requête 21 peut correspondre directement à une liste d'identifiants de cellules voisines.

On peut aussi prévoir que la liste de cellules voisines soit directement associée à la cellule 14 dans la base de données 12. Dans ces conditions, il n'est plus nécessaire d'indiquer cette liste dans le message de requête. Il suffit que le message de requête indique la cellule 14 dans laquelle le terminal est situé, pour que l'entité de gestion de base de données soit en mesure d'en déduire une liste des cellules voisines pouvant potentiellement accueillir le terminal 10. Dans ce cas, l'information relative à la liste de cellules indiquée dans le message de requête 21 peut correspondre simplement à un identifiant de la cellule 14.

Le message de requête 21 d'informations peut aussi indiquer un nombre d'utilisateurs, permettant ainsi de faire une demande groupée sur plusieurs utilisateurs.

L'émission de ce message de requête 21 d'informations depuis la cellule à destination de l'entité de gestion de base de données peut être déclenchée au cours d'un contrôle d'admission du terminal 10 dans la cellule 14. En effet, généralement, lorsqu'un terminal 10 demande à être admis sur le réseau, il émet une requête de ressources radio pour un flux de données d'un type déterminé dans la cellule 14, qu'il a sélectionné sur un critère quelconque tel que, par exemple, une caractéristique relative au signal reçu. Si cette cellule 14 ne peut pas fournir à ce terminal un niveau de QoS associé à ce type du flux de données, une requête d'informations 21 peut alors être émise à destination de l'entité de gestion de base de données pour permettre l'admission de ce terminal 10 dans une cellule voisine qui est en mesure de lui fournir le niveau de QoS requis.

Lorsqu'une admission d'un terminal est finalement rejetée dans le réseau pour un type de flux de données, le terminal peut émettre à nouveau une requête de ressources radio indiquant un autre type de flux de données associé à un niveau de QoS plus faible pour pouvoir malgré tout accéder au réseau. Un mode de réalisation de la présente invention peut ici encore s'appliquer aisément.

Une telle émission de requête d'information peut également être déclenchée pour gérer la mobilité du terminal 10 dans la cellule 14. Dans ce contexte, le terminal bénéficie de ressources radio qui lui sont allouées dans la cellule 14 mais, une perte de qualité relativement au flux de données en cours de transmission est détectée. La cellule 14 requiert des informations auprès de l'entité de gestion de base de données de sorte à déterminer si une cellule voisine est capable d'offrir une meilleure qualité à la communication en cours.

Un tel déclenchement de requête d'informations auprès de l'entité de gestion de base de données 12 peut être réalisé par le terminal lui-même ou encore par une entité de gestion de ressources de la cellule dans laquelle le terminal se situe.

Quelque soit le type de déclenchement de l'émission d'un message de requête d'informations auprès de l'entité de gestion de base de données 12, sur réception de ce message, l'entité de gestion de base de données récupère les informations relatives aux ressources radio de chacune des cellules de la liste considérée et relatives au type de flux de données indiqué. Elle transmet ces informations à destination de la cellule 14 via un message de réponse 22.

Puis, la cellule 14 traite les informations ainsi reçues de sorte à déterminer si une des cellules voisines est en mesure d'allouer au terminal 10 des ressources radio permettant d'atteindre le niveau QoS associé au flux de données considéré, ce traitement pouvant être fait soit au niveau d'une entité de gestion de ressources radio de la cellule 14, soit au niveau du terminal 10 concerné lui-même, soit encore au niveau de tout autre entité centrale de la cellule.

La base de données 12 contient, pour chaque cellule k, k étant un nombre entier compris entre 1 et le nombre N_{cellules} de cellules du réseau et pour chaque type de flux de données fᵢ, i étant un nombre entier compris entre 1 et le nombre de type de flux de données offert dans le réseau N_{flux}, des informations qui lui permettent de fournir une réponse à la requête 21 émise depuis une cellule.

La présente invention couvre tout type de réponse qui peut être pertinent pour la cellule qui a requis des informations auprès de l'entité de gestion de base de données. Cette réponse peut par exemple être binaire et consister à indiquer si 'Oui' ou 'Non' la cellule voisine considérée est capable de répondre aux attentes du terminal 10. Ainsi, dans le cas où le nombre de ressources radio disponibles dans la cellule considérée est suffisant pour le type de flux de données requis, cette indication de réponse correspond à 'Oui', et dans le cas contraire à 'NON'.

Dans un mode de réalisation, une réponse peut être pondérée. Ainsi, par exemple, la réponse peut prendre en compte non seulement le nombre de ressources radio correspondant au niveau de qualité de service associé au type de flux indiqué dans la requête, mais aussi le nombre de ressources radio total ou partiel, par type de flux, qui sont disponibles dans la cellule considérée.

La réponse peut alors correspondre à une réponse conditionnelle comme par exemple :
- "Oui, absolument", dans le cas notamment où le nombre de ressources radio disponibles dans la cellule k est largement supérieur au nombre de ressources radio requises pour le type de flux de données fᵢ ;
- "Oui, sauf modification brusque", dans le cas notamment où le nombre de ressources disponibles radio dans la cellule k est à peine supérieur au nombre de ressources radio requises pour le type de flux de données fᵢ, dans ce cas on peut alors craindre que, suite à un changement rapide d'allocation des ressources radio dans cette cellule k, il n'y ait plus assez de ressources radio pour le terminal 10;
- "Non, sauf modification brusque", dans le cas notamment où le nombre de ressources disponibles radio dans la cellule k est à peine inférieur au nombre de ressources radio requises pour le type de flux de données fᵢ; dans ce cas on peut alors penser que, suite à un changement rapide d'allocation des ressources radio dans cette cellule k, il y ait assez de ressources radio pour le terminal 10
- "Non, absolument pas", dans le cas notamment où le nombre de ressources disponibles radio dans la cellule k est largement inférieur au nombre de ressources radio requises pour le type de flux de données fᵢ.

Dans un mode de réalisation de la présente invention, la base de données 12 contient également pour chaque cellule k, pour chaque flux fᵢ, un nombre d'utilisateurs Nᵤₜᵢₗᵢₛₐₜₑᵤᵣₛ correspondant qui peuvent être servis, Uᵤₜᵢₗᵢₛₐₜₑᵤᵣₛ étant un nombre entier. La base de données 12 peut également comprendre un nombre d'utilisateurs pour chacune des réponses possibles, représentant le nombre d'utilisateurs qui peuvent être servis dans la cellule avec une valeur de l'indication de réponse donnée.

Elle peut en outre aussi contenir une information additionnelle qui permet d'évaluer un degré de fiabilité des informations relativement aux différents types d'informations contenues dans la base de données. Ainsi, un degré de fiabilité peut être notamment attribué à chacune des réponses possibles. Ce degré de fiabilité fournit une estimation de l'incertitude sur les informations auxquelles elle est associée. Plus la valeur de ce degré de fiabilité est élevée, plus cette incertitude est importante.

Dans un mode de réalisation de la présente invention, ce degré de fiabilité peut être basé sur un nombre de messages de requête 21 reçus pour une cellule k depuis la dernière mise à jour de la base de données la concernant. Dans ce cas, une réponse peut être associée à ce degré de fiabilité de sorte à permettre une prise en compte du risque de modifications d'allocation de ressources radio dans la cellule k en fonction du nombre de message de requête d'informations reçus pour cette cellule k depuis la dernière mise à jour.

On peut également prévoir que ce degré de fiabilité est basé sur les informations contenues dans ces messages de requête de manière à permettre une évaluation plus fine du risque de modifications possibles qui pèse sur la réponse indiquée dans le message de réponse émis depuis l'entité de gestion de base de données. Ainsi, avantageusement, on peut prendre en compte le nombre de ressources radio qui pourraient potentiellement être requises s'il s'avérait que tous les messages de requête correspondaient à un changement effectif vers cette cellule k.

Ce degré de fiabilité, dans un mode de réalisation de la présente invention, est exprimé sous la forme d'un drapeau de Fiabilité, pour chaque cellule k, et chaque type de flux de données fᵢ. Il est mis à jour lorsque des requêtes sont envoyées, par les autres cellules du réseau associées à la base de données 12, sur la cellule k et sur le type de flux de données fᵢ.

Ainsi, ce drapeau peut être réinitialisé à zéro à chaque mise à jour de la base de données concernant la cellule k, et peut être mis à jour sur réception de chaque message de requête reçu pour la cellule k au niveau de la base de données 12.

Par exemple, on peut prévoir que, lorsqu'une requête est relative à un nombre m d'utilisateurs, le drapeau de Fiabilité de la cellule k pour le type de flux de données fᵢ peut être augmenté de m. Dans ces conditions, lorsqu'une cellule donnée fait une requête d'information sur la cellule k et le type de flux fᵢ, elle reçoit dans le message de réponse une réponse, affectée du drapeau de Fiabilité qui présente une valeur m. Cette cellule donnée en déduit que m terminaux sont susceptibles de faire un changement de cellule vers la cellule k avec le type de flux de données fᵢ, et donc que des ressources radio sont susceptibles d'être allouées à ces m terminaux, c'est-à-dire que ces ressources radio peuvent être pré-emptées, avant qu'elles ne puissent être allouées à cette cellule donnée.

En conséquence, le drapeau de Fiabilité de la cellule k, pour un type de flux de données fᵢ est une information supplémentaire qui permet à une cellule de baser sa décision de changement de cellule sur une évaluation de la pertinence des autres informations contenues dans le message de réponse.

Un message de réponse 22 peut donc comprendre, pour chaque cellule de la liste de cellules et pour le type de flux de données indiqués dans le message de réponse, les informations suivantes:
- une réponse ;
- un nombre d'utilisateurs ; et
- une valeur de drapeau associée à ces informations.

Ainsi, sur réception d'un tel message de réponse, la cellule 14 connaît le contexte conditionnel dans lequel les cellules voisines sont capables de fournir les ressources radio requises pour le terminal 10 et peut traiter ce degré de fiabilité de manière probabiliste par exemple. Sa valeur peut être prise en compte dans un algorithme décisionnel mis en oeuvre dans la cellule.

Le tableau suivant correspond à une structure interne de la base de données 12 dans un mode de réalisation de la présente invention. La base de données 12 contient des informations sur un ensemble de N_{cellules} cellules, N_{cellules} étant un nombre entier. Ces cellules peuvent couvrir une zone géographique plus ou moins large.

Dans une variante, les informations relatives aux ressources radio des différentes cellules peuvent être stockées dans plusieurs bases de données qui se recouvrent, afin de limiter la taille de chaque base de données.

| | | | | |
|---|---|---|---|---|
| Cellule 1 | Flux f₁ | Réponse {Cellule 1, Flux f₁} | Nᵤₜᵢₗᵢₛₐₜₑᵤᵣₛ {Cellule 1, Flux f₁} | Fiabilité {Cellule 1, Flux 1} |
| | ... | | | |
| | Flux f_{N} | Réponse {Cellule 1, Flux f_{N}} | Nᵤₜᵢₗᵢₛₐₗₑᵤᵣₛ {Cellule 1, Flux f_{N}} | Fiabilité {Cellule 1, Flux f_{N}} |
| ... | | | | |
| Cellule N_{cellule} | Flux 1 {Cellule N_{cellule}, Flux f₁} | Réponse {Cellule N_{cellule}, Flux fᵢ} | Nᵤₜᵢₗᵢₛₐₜₑᵤᵣₛ {Cellule N_{cellule}, Flux f₁} | Fiabilité {Cellule N_{cellule}, Flux f₁} |
| | ... | | | |
| | Flux N_{flux} {Cellule N_{cellule}, Flux f_{N}} | Réponse {Cellule N_{cellule}, Flux f_{N}} | Nᵤₜᵢₗᵢₛₐₜₑᵤᵣₛ {Cellule N_{cellule}, Flux f_{N}} | Fiabilité {Cellule N_{cellule}, Flux f_{N}} |

La figure 3 illustre une allocation de ressources radio dans la cellule 14 selon un mode de réalisation de la présente invention et l'interaction de cette allocation de ressources radio avec une gestion de la base de données.

Au niveau de chaque cellule, une allocation dynamique des ressources radio aux utilisateurs peut être planifiée en fonction du nombre d'utilisateurs, de leurs différents types de flux de données, de leurs priorités, etc...

Il est possible de prévoir un premier niveau de planification 31 correspondant à une adaptation de l'allocation de ressources dans la cellule. Ce niveau de planification peut être lié à la gestion des contraintes de QoS des utilisateurs, les contraintes pouvant être des contraintes temporelles ou des contraintes de charge (par exemple, contrainte de latence, contrainte de délai entre deux paquets différents, etc.). Un tel niveau de planification vise à garantir que les contraintes associées aux différents types de flux de données soient respectées.

Ce niveau de planification peut aussi correspondre à une allocation de ressources radio qui ne garantit pas un niveau de QoS, pour un type de flux de données. Dans ce cas, une adaptation peut être effectuée rapidement, sans gestion de contraintes relatives à un niveau de QoS des utilisateurs.

Un second niveau de planification peut correspondre à une adaptation des liens radio en fonction des modifications rapides des canaux radio. Une telle adaptation peut consister notamment à adapter une modulation et un codage au niveau de chaque trame, en fonction des variations de l'affaiblissement rapide, ou en anglais 'fast fading'.

Dans un mode de réalisation de la présente invention, dans la cellule 14, périodiquement, une planification du premier niveau est effectuée, selon une période T pouvant être de l'ordre de 100 ms par exemple. Cette planification consiste à déterminer, pour chacun des N_{flux} types de flux de données, les ressources radio R_{i,1}, R_{i,2}, ..., R_{i,n} allouées globalement aux N_{utilisateurs,flux_i} qui demandent à obtenir le type de flux de données flux_i, où n peut dépendre du nombre des utilisateurs N_{utilisateurs,flux_i} ainsi que des caractéristiques du type de flux de données considéré flux_i. Ces ressources radio peuvent être des ressources en temps, en code, en temps et code, en temps et fréquence, en fréquence et code, ou encore en temps, fréquence et code.

Puis, une fois ces ressources radio allouées, une planification du second niveau est effectuée dans la cellule 14 pour adapter le lien radio en fonction des modifications rapides du canal. Cette adaptation de lien est contrainte par le nombre de ressources allouées au cours de la planification du second niveau.

Dans un tel contexte de planification, la cellule 14 émet un message de mise à jour 'UPD' 32 de la base de données 12 à chaque mise en oeuvre d'une telle planification. Cette planification étant périodique selon une période de temps T, la base de données se trouve être mise à jour périodiquement pour les données stockées relativement aux ressources radio de cette cellule.

Ainsi, avantageusement, les données stockées dans la base de données 12 peuvent suivre les variations liées à une admission de nouveaux utilisateurs dans une cellule, soit directement, soit suite à un transfert de cellule (ou 'handover'). Elles peuvent aussi suivre les variations liées à une modification du type de flux de données du terminal, qui peut correspondre à une modification du type de flux que le terminal souhaite utiliser, ou encore à une modification du type de flux de données qui est décidée par une planification interne à la cellule. Une telle modification liée à une planification peut, par exemple, faire suite à une pré-emption de certaines ressources radio de la cellule par un autre utilisateur.

Par ailleurs, sur réception de chaque message de requête 21 reçu pour une liste de cellules, les degrés de fiabilité respectifs associés à ces cellules sont mis à jour dans la base de données 12.

Une base de données 12 selon un mode de réalisation de la présente invention offre une structure souple et paramétrable de sorte qu'elle peut fournir des informations relatives aux ressources radio des cellules qui sont adaptées à tout type d'algorithme décisionnel connu de l'homme du métier. Ainsi, on peut prévoir que la structure d'une telle base de données, ainsi que sa mise à jour, soient avantageusement adaptées à l'algorithme décisionnel appliqué dans la cellule considérée.

On peut prévoir que les différentes valeurs définies pour une réponse à indiquer dans un message de réponse 22 peuvent être interprétées au niveau de la cellule, cette dernière décidant, en fonction de valeurs seuils qui lui sont propres, si la valeur est acceptable pour un type de flux de données donné.

Dans une variante, on peut prévoir que l'entité de gestion de base de données traduit une valeur de réponse, stockée sous une forme de valeur absolue, en des valeurs adaptées pour les cellules lorsqu'elle répond à des requêtes de ces dernières. Une telle variante peut être avantageusement mise en oeuvre dans le cas où les cellules 13-15 du réseau sont fournies par des constructeurs différents et/ou présentent des traitements respectifs différents.

Les sections suivantes décrivent la présente invention dans un réseau selon un protocole de type IEEE 802.16⁸ (reseau WiMax par exemple), dans lequel les cinq types de flux de données suivants sont gérés :
- 'Unsolicited Grant Service' (UGS) qui est adapté pour des applications temps-réel générant des données à débit fixe, telle que la Voix sur IP sans compression des silences ;
- 'Extended Real-Time Variable Rate' (ERT-VR) Service qui est adapté pour des applications temps-réel qui génèrent des données à débit variable sur une base périodique, telle que la Voix sur IP avec compression des silences ;
- 'Real-Time Variable Rate' (RT-VR) Service qui est adapté pour des applications temps-réel avec des débits variables, requérant un débit et un délai garantis, telle qu'une transmission de données vidéo de type MPEG ;
- 'Non-Real Time Variable Rate' (NRT-VR) Service qui est adapté pour des applications qui requièrent un débit garanti, mais qui ne sont pas sensibles au délai, tel que FTP (File Transfer Protocol) ;
- 'Best Effort' (BE) Service qui est adapté pour des applications qui n'ont pas de contrainte de débit, ni de délai ;

Dans un tel contexte, une planification d'allocation de ressources radio du premier niveau peut s'effectuer selon les étapes successives suivantes :
- allouer des ressources radio pour l'ensemble des utilisateurs qui demandent un type de flux UGS, parmi les intervalles temps-fréquence qui ne sont pas par défaut alloués à d'autres canaux, tels que des canaux pilotes ;
- allouer des ressources radio pour l'ensemble des utilisateurs qui demandent un type de flux ERT-VR, parmi les intervalles temps-fréquence restant disponibles ; et
- allouer des ressources radio pour l'ensemble des utilisateurs qui demandent un service RT-VR, parmi les intervalles temps-fréquence restant disponibles ;
- allouer des ressources radio pour l'ensemble des utilisateurs qui demandent un service NRT-VR, parmi les intervalles temps-fréquence restant disponibles ;
- allouer des ressources pour l'ensemble des utilisateurs qui demandent un service BE, parmi les intervalles temps-fréquence restant disponibles.

Une telle planification permet de garantir un niveau QoS déterminé associé à un type de flux de données déterminé.

Par exemple, si, à l'issue d'une planification d'allocation de ressources, il reste dans la cellule 14 suffisamment d'intervalles temps-fréquences, répondant à des contraintes d'espacement requises, pour fournir à deux utilisateurs supplémentaires un type de flux UGS, alors la réponse indiquée dans le message de réponse pour la cellule 14, et pour le flux UGS, peut correspondre à "Oui, sauf modification brusque" ; et le nombre d'utilisateurs Nᵤₜᵢₗᵢₛₐₜₑᵤᵣₛ peut être égal à 2.

Quand un terminal 10 dans la cellule 14, voisine de la cellule 13, voit la qualité de sa communication diminuer, il peut effectuer des mesures sur les cellules voisines, tandis que la cellule 14 envoie à l'entité de gestion de base de données 12 un message de requête 21 relativement aux cellules voisines et pour le type de flux de données UGS.

Dans le cas où, d'une part, les mesures du terminal 10 permettent de conclure que la cellule 13 est la mieux adaptée à la requête relative à ce terminal 10, et, d'autre part, le message de réponse 21 indique, pour la cellule 13 et pour le type de flux de données UGS, une réponse correspondant à "Oui, sauf modification brusque", un nombre d'utilisateurs Nᵤₜᵢₗᵢₛₐₜₑᵤᵣₛ égal à 2, et un drapeau de Fiabilité égal à 0, on peut déduire que le terminal peut effectuer une mobilité vers la cellule 14, tout en étant assuré que le niveau de QoS requis y sera fourni.

Aucune limitation n'est attachée à un algorithme décisionnel mis en oeuvre dans un mode de réalisation de la présente invention. En effet, le traitement des informations reçues depuis l'entité de gestion de base de données 12 dans le message de réponse 22 n'est décrit ici qu'à titre illustratif.

## Revendications

1. Procédé de gestion de ressources radio dans un réseau de télécommunications comprenant une pluralité de cellules radio (13-15) et une base de données (12) qui est associée à ladite pluralité de cellules et qui comprend des informations relatives à des ressources radio de chaque cellule radio de la pluralité de cellules, ladite base de données étant gérée par une entité de gestion de base de données (16) ;
ledit procédé comprenant les étapes suivantes au niveau d'une première cellule :
/a/ émettre à destination de l'entité de gestion de base de données un message de requête (21) d'informations relatives à des ressources radio d'au moins une seconde cellule de ladite pluralité de cellules ;
/b/ recevoir depuis l'entité de gestion de base de données un message de réponse (22) indiquant lesdites informations requises ; et
/c/ décider de requérir des ressources radio dans ladite seconde cellule sur la base desdites informations reçues.

2. Procédé de gestion de ressources radio selon la revendication 1, dans lequel, le réseau de télécommunications offrant un ensemble de types de flux de données auxquels sont associés des niveaux de qualité de service respectifs,
le message de requête (21) d'informations relatives à des ressources radio indique une information relative à une liste de cellules comprises dans la pluralité de cellules et au moins un type de flux de données dudit ensemble de types de flux de données; et
dans lequel le message de réponse (22) indique, pour chaque cellule de la liste des cellules indiquée dans le message de requête (21) correspondant et pour le type de flux de données indiqué dans le message de requête (21) correspondant, une réponse basée sur un nombre de ressources radio disponibles dans ladite cellule et sur le niveau de qualité de service associé au type de flux indiqué.

3. Procédé de gestion de ressources radio selon l'une des revendications 1 à 2 dans lequel le message de réponse (22) indique, pour chaque cellule de la liste des cellules indiquée dans le message de requête (21) correspondant et pour le type de flux de données indiqué dans le message de requête (21) correspondant, un nombre d'utilisateurs pouvant être servis dans ladite cellule pour ledit type de flux de données.

4. Procédé de gestion de ressources radio selon l'une quelconque des revendications précédentes, dans lequel une cellule applique périodiquement une allocation de ressources radio planifiée ; et
dans lequel ladite cellule émet un message de mise à jour de la base de données (12) à destination de l'entité de gestion de base de données (16) après chacune desdites allocations de ressources radio planifiées.

5. Procédé de gestion de ressources radio selon l'une quelconque des revendications précédentes, dans lequel la base de données (12) est mise à jour au cours du temps ; et
dans lequel le message de réponse (22) indique, pour chaque cellule de la liste des cellules indiquée dans le message de requête (21) correspondant et pour le type de flux de données indiqué dans le message de requête (21) correspondant, un niveau de fiabilité qui correspond au nombre de message de requête qui ont été reçus depuis la dernière mise à jour de la base de données et qui indiquent ladite cellule.

6. Entité de gestion de ressources radio (19) dans une première cellule d'un réseau de télécommunications comprenant une pluralité de cellules associées à une base de données (12) qui comprend des informations relatives à des ressources radio de chaque cellule radio de la pluralité de cellules, ladite base de données étant gérée par une entité de gestion de base de données (16) ;
ladite entité de gestion de ressources radio comprenant :
- une unité d'émission (101) adaptée pour émettre à destination de l'entité de gestion de base de données (16) un message de requête (21) d'informations relatives à des ressources radio d'au moins une seconde cellule de ladite pluralité de cellules ;
- une unité de réception (102) adaptée pour recevoir depuis l'entité de gestion de base de données un message de réponse (22) indiquant lesdites informations requises ; et
- une unité de décision (103) adaptée pour décider de requérir des ressources radio dans ladite seconde cellule sur la base desdites informations reçues.

7. Terminal (10) dans une première cellule comprise dans un réseau de télécommunications comprenant une pluralité de cellules associées à une base de données (12) qui comprend des informations relatives à des ressources radio de chaque cellule radio de la pluralité de cellules, ladite base de données étant gérée par une entité de gestion de base de données (16), chaque cellule étant gérée par une entité de gestion de ressources radio (19) ; ledit terminal comprenant :
- une unité de réception (104) adaptée pour recevoir depuis l'entité de gestion de ressources radio un message de réponse (22) indiquant des informations relatives aux ressources radio d'une seconde cellule, lesdites informations ayant été requises auprès de l'entité de gestion de base de données à partir de la première cellule ; et
- une unité de décision (105) adaptée pour décider de requérir des ressources radio dans ladite seconde cellule sur la base desdites informations reçues.

8. Terminal selon la revendication 7, dans lequel les informations requises auprès de l'entité de gestion de base de données (16) à partir de la première cellule sont requises par le terminal en émettant un message de requête (21) d'informations relatives à des ressources radio d'au moins la seconde cellule de ladite pluralité de cellules.

9. Entité de gestion de base de données (16) adaptée pour gérer une base de données (12) dans un réseau de télécommunications comprenant une pluralité de cellules radio (13-15) et ladite base de données (12) ; ladite base de données étant associée à ladite pluralité de cellules et comprenant des informations relatives à des ressources radio de chaque cellule radio de la pluralité de cellules ;
ladite entité de gestion de base de données comprenant :
- une première unité d'interface (17) avec ladite pluralité de cellules adaptée pour recevoir depuis une première cellule de ladite pluralité de cellules un message de requête (21) d'informations relatives à des ressources radio d'au moins une seconde cellule de ladite pluralité de cellules et adaptée pour émettre un message de réponse (22) correspondant audit message de requête ; et
- une seconde unité d'interface (18) avec la base de données adaptée pour récupérer les informations relatives aux ressources radio requises par un message de requête.

10. Système de télécommunications comprenant une entité de gestion de base de données selon la revendication 9 et un élément choisi parmi le groupe comprenant un terminal selon la revendication 7 ou 8 et une entité de gestion de ressources radio selon la revendication 6.

11. Programme d'ordinateur destiné à être installé dans une entité de gestion de base de données selon la revendication 9, comprenant des instructions aptes à mettre en oeuvre le procédé selon l'une quelconque des revendications 1 à 5, lors d'une exécution du programme par des moyens de traitement de l'entité de gestion de base de données.

12. Programme d'ordinateur destiné à être installé dans un terminal selon la revendication 7 ou 8, comprenant des instructions aptes à mettre en oeuvre le procédé selon l'une quelconque des revendications 1 à 5, lors d'une exécution du programme par des moyens de traitement du terminal.

13. Programme d'ordinateur destiné à être installé dans une entité de gestion de ressources radio selon la revendication 6, comprenant des instructions aptes à mettre en oeuvre le procédé selon l'une quelconque des revendications 1 à 5, lors d'une exécution du programme par des moyens de traitement de l'entité de gestion de ressources radio.

## Claims

1. Method for managing radio resources in a telecommunication network comprising a plurality of radio cells (13-15) and a database (12) which is associated with said plurality of cells and which comprises information relating to radio resources of each radio cell of the plurality of cells, said database being managed by a database management entity (16);
said method comprising the following steps at the level of a first cell:
/a/ sending the database management entity a request message (21) seeking information relating to radio resources of at least one second cell of said plurality of cells;
/b/ receiving from the database management entity a response message (22) indicating said requested information; and
/c/ deciding to request radio resources in said second cell on the basis of said information received.

2. Method for managing radio resources according to Claim 1, in which, the telecommunication network offering a set of types of data streams with which respective levels of service quality are associated,
the request message (21) seeking information relating to radio resources indicates an item of information relating to a list of cells included in the plurality of cells and at least one type of data stream of said set of types of data streams; and
in which the response message (22) indicates, for each cell of the list of cells indicated in the corresponding request message (21) and for the type of data stream indicated in the corresponding request message (21), a response based on a number of radio resources available in said cell and on the service quality level associated with the type of stream indicated.

3. Method for managing radio resources according to one of Claims 1 to 2, in which the response message (22) indicates, for each cell of the list of cells indicated in the corresponding request message (21) and for the type of data stream indicated in the corresponding request message (21), a number of users able to be served in said cell for said type of data stream.

4. Method for managing radio resources according to any one of the preceding claims, in which a cell periodically applies a scheduled allocation of radio resources; and
in which said cell sends a database update message (12) destined for the database management entity (16) after each of said scheduled radio resource allocations.

5. Method for managing radio resources according to any one of the preceding claims, in which the database (12) is updated in the course of time; and
in which the response message (22) indicates, for each cell of the list of cells indicated in the corresponding request message (21) and for the type of data stream indicated in the corresponding request message (21), a reliability level which corresponds to the number of request messages which have been received since the last update of the database and which indicate said cell.

6. Entity for managing radio resources (19) in a first cell of a telecommunication network comprising a plurality of cells associated with a database (12) which comprises information relating to radio resources of each radio cell of the plurality of cells, said database being managed by a database management entity (16);
said radio resource management entity comprising:
- a send unit (101) adapted for sending the database management entity (16) a request message (21) seeking information relating to radio resources of at least one second cell of said plurality of cells;
- a receive unit (102) adapted for receiving from the database management entity a response message (22) indicating said requested information; and
- a decision unit (103) adapted for deciding to request radio resources in said second cell on the basis of said information received.

7. Terminal (10) in a first cell included in a telecommunication network comprising a plurality of cells associated with a database (12) which comprises information relating to radio resources of each radio cell of the plurality of cells, said database being managed by a database management entity (16), each cell being managed by a radio resource management entity (19); said terminal comprising:
- a receive unit (104) adapted for receiving from the radio resource management entity a response message (22) indicating information relating to the radio resources of a second cell, said information having been requested from the database management entity on the basis of the first cell; and
- a decision unit (105) adapted for deciding to request radio resources in said second cell on the basis of said information received.

8. Terminal according to Claim 7, in which the information requested from the database management entity (16) on the basis of the first cell is requested by the terminal by sending a request message (21) seeking information relating to radio resources of at least the second cell of said plurality of cells.

9. Database management entity (16) adapted for managing a database (12) in a telecommunication network comprising a plurality of radio cells (13-15) and said database (12); said database being associated with said plurality of cells and comprising information relating to radio resources of each radio cell of the plurality of cells; said database management entity comprising:
- a first interface unit (17) for interfacing with said plurality of cells, adapted for receiving from a first cell of said plurality of cells a request message (21) seeking information relating to radio resources of at least one second cell of said plurality of cells and adapted for sending a response message (22) corresponding to said request message; and
- a second interface unit (18) for interfacing with the database adapted for recovering the information relating to the radio resources requested by a request message.

10. Telecommunication system comprising a database management entity according to Claim 9 and an element chosen from among the group comprising a terminal according to Claim 7 or 8 and a radio resource management entity according to Claim 6.

11. Computer program intended to be installed in a database management entity according to Claim 9, comprising instructions able to implement the method according to any one of Claims 1 to 5, during an execution of the program by processing means of the database management entity.

12. Computer program intended to be installed in a terminal according to Claim 7 or 8, comprising instructions able to implement the method according to any one of Claims 1 to 5, during an execution of the program by processing means of the terminal.

13. Computer program intended to be installed in a radio resource management entity according to Claim 6, comprising instructions able to implement the method according to any one of Claims 1 to 5, during an execution of the program by processing means of the radio resource management entity.

## Patentansprüche

1. Verfahren zur Verwaltung von Funkressourcen in einem Telekommunikationsnetz, das mehrere Funkzellen (13-15) und eine Datenbank (12) enthält, die den mehreren Zellen zugeordnet ist und die Informationen bezüglich Funkressourcen jeder Funkzelle der mehreren Zellen enthält, wobei die Datenbank von einer Datenbank-Verwaltungsentität (16) verwaltet wird;
wobei das Verfahren auf der Ebene einer ersten Zelle die folgenden Schritte enthält:
/a/ Senden einer Anforderungsmitteilung (21) von Informationen bezüglich Funkressourcen mindestens einer zweiten Zelle der mehreren Zellen an die Datenbank-Verwaltungsentität;
/b/ Empfang einer die angeforderten Informationen angebenden Antwortmitteilung (22) von der Datenbank-Verwaltungsentität; und
/c/ Entscheidung, Funkressourcen in der zweiten Zelle auf der Basis der empfangenen Informationen anzufordern.

2. Verfahren zur Verwaltung von Funkressourcen nach Anspruch 1, bei dem, wenn das Telekommunikationsnetz eine Gruppe von Datenstromtypen anbietet, denen jeweilige Dienstqualitätspegel zugeordnet sind,
die Anforderungsmitteilung (21) von Informationen bezüglich von Funkressourcen eine Information bezüglich einer Liste von in den mehreren Zellen enthaltenen Zellen und mindestens einen Datenstromtyp der Gruppe von Datenstromtypen angibt; und
bei dem die Antwortmitteilung (22) für jede Zelle der in der entsprechenden Anforderungsmitteilung (21) angegebenen Liste der Zellen und für den in der entsprechenden Anforderungsmitteilung (21) angegebenen Datenstromtyp eine Antwort angibt, die auf einer Anzahl von in der Zelle verfügbaren Funkressourcen und auf dem dem angegebenen Stromtyp zugeordneten Dienstqualitätspegel basiert.

3. Verfahren zur Verwaltung von Funkressourcen nach einem der Ansprüche 1 bis 2, bei dem die Antwortmitteilung (22) für jede Zelle der Liste der Zellen, die in der entsprechenden Anforderungsmitteilung (21) angegeben ist, und für den Datenstromtyp, der in der entsprechenden Anforderungsmitteilung (21) angegeben ist, eine Anzahl von Benutzern angibt, die in der Zelle für den Datenstromtyp bedient werden können.

4. Verfahren zur Verwaltung von Funkressourcen nach einem der vorhergehenden Ansprüche, bei dem eine Zelle periodisch eine geplante Zuteilung von Funkressourcen anwendet; und
bei dem die Zelle nach jeder der geplanten Zuteilungen von Funkressourcen eine Aktualisierungsmitteilung der Datenbank (12) an die Datenbank-Verwaltungsentität (16) sendet.

5. Verfahren zur Verwaltung von Funkressourcen nach einem der vorhergehenden Ansprüche, bei dem die Datenbank (12) im Lauf der Zeit aktualisiert wird; und bei dem die Antwortmitteilung (22) für jede Zelle der in der entsprechenden Anforderungsmitteilung (21) angegebenen Liste der Zellen und für den in der entsprechenden Anforderungsmitteilung (21) angegebenen Datenstromtyp einen Zuverlässigkeitsgrad angibt, der der Anzahl von Anforderungsmitteilungen entspricht, die seit der letzten Aktualisierung der Datenbank empfangen wurden und die die Zelle angeben.

6. Funkressourcen-Verwaltungsentität (19) in einer ersten Zelle eines Telekommunikationsnetzes, das mehrere Zellen enthält, die einer Datenbank (12) zugeordnet sind, welche Informationen bezüglich von Funkressourcen jeder Funkzelle der mehreren Zellen enthält, wobei die Datenbank von einer Datenbank-Verwaltungsentität (16) verwaltet wird;
wobei die Funkressourcen-Verwaltungsentität enthält:
- eine Sendeeinheit (101), die geeignet ist, um an die Datenbank-Verwaltungsentität (16) eine Anforderungsmitteilung (21) von Informationen bezüglich von Funkressourcen mindestens einer zweiten Zelle der mehreren Zellen zu senden;
- eine Empfangseinheit (102), die geeignet ist, um von der Datenbank-Verwaltungsentität eine die angeforderten Informationen angebende Antwortmitteilung (22) zu empfangen; und
- eine Entscheidungseinheit (103), die geeignet ist, um zu entscheiden, Funkressourcen in der zweiten Zelle auf der Basis der empfangenen Informationen anzufordern.

7. Endgerät (10) in einer ersten Zelle, die in einem Telekommunikationsnetz enthalten ist, das mehrere Zellen enthält, welche einer Datenbank (12) zugeordnet sind, die Informationen bezüglich von Funkressourcen jeder Funkzelle der mehreren Zellen enthält, wobei die Datenbank von einer Datenbank-Verwaltungsentität (16) verwaltet wird, wobei jede Zelle von einer Funkressourcen-Verwaltungsentität (19) verwaltet wird; wobei das Endgerät enthält:
- eine Empfangseinheit (104), die geeignet ist, um von der Funkressourcen-Verwaltungsentität eine Antwortmitteilung (22) zu empfangen, die Informationen bezüglich der Funkressourcen einer zweiten Zelle angibt, wobei die Informationen von der Datenbank-Verwaltungsentität ausgehend von der ersten Zelle angefordert wurden; und
- eine Entscheidungseinheit (105), die geeignet ist, um zu entscheiden, Funkressourcen in der zweiten Zelle auf der Basis der empfangenen Informationen anzufordern.

8. Endgerät nach Anspruch 7, bei dem die von der Datenbank-Verwaltungsentität (16) ausgehend von der ersten Zelle angeforderten Informationen vom Endgerät angefordert werden, indem eine Anforderungsmitteilung (21) von Informationen bezüglich von Funkressourcen mindestens der zweiten Zelle der mehreren Zellen gesendet wird.

9. Datenbank-Verwaltungsentität (16), die geeignet ist, um eine Datenbank (12) in einem Telekommunikationsnetz zu verwalten, das mehrere Funkzellen (13-15) und die Datenbank (12) enthält; wobei die Datenbank den mehreren Zellen zugeordnet ist und Informationen bezüglich von Funkressourcen jeder Funkzelle der mehreren Zellen enthält;
wobei die Datenbank-Verwaltungsentität enthält:
- eine erste Schnittstelleneinheit (17) mit den mehreren Zellen, die geeignet ist, um von einer ersten Zelle der mehreren Zellen eine Anforderungsmitteilung (21) von Informationen bezüglich von Funkressourcen mindestens einer zweiten Zelle der mehreren Zellen zu empfangen, und geeignet ist, um eine entsprechende Antwortmitteilung (22) auf die Anforderungsmitteilung zu senden; und
- eine zweite Schnittstelleneinheit (18) mit der Datenbank, die geeignet ist, um die von einer Anforderungsmitteilung angeforderten Informationen bezüglich der Funkressourcen abzurufen.

10. Telekommunikationssystem, das eine Datenbank-Verwaltungsentität nach Anspruch 9 und ein Element enthält, das aus der Gruppe ausgewählt wird, die ein Endgerät nach Anspruch 7 oder 8 und eine Funkressourcen-Verwaltungsentität nach Anspruch 6 enthält.

11. Computerprogramm, das dazu bestimmt ist, in einer Datenbank-Verwaltungsentität nach Anspruch 9 installiert zu werden, das Anweisungen enthält, die das Verfahren nach einem der Ansprüche 1 bis 5 bei einer Ausführung des Programms durch Verarbeitungseinrichtungen der Datenbank-Verwaltungsentität durchführen können.

12. Computerprogramm, das dazu bestimmt ist, in einem Endgerät nach Anspruch 7 oder 8 installiert zu werden, das Anweisungen enthält, die das Verfahren nach einem der Ansprüche 1 bis 5 bei einer Ausführung des Programms durch Verarbeitungseinrichtungen des Endgeräts durchführen können.

13. Computerprogramm, das dazu bestimmt ist, in einer Funkressourcen-Verwaltungsentität nach Anspruch 6 installiert zu werden, das Anweisungen enthält, die das Verfahren nach einem der Ansprüche 1 bis 5 bei einer Ausführung des Programms durch Verarbeitungseinrichtungen der Funkressourcen-Verwaltungsentität durchführen können.
